# EUROPEAN PATENT SPECIFICATION

(11) **EP 1 826 747 B1**
(45) Date of publication and mention of the grant of the patent: **27.05.2009**
(21) Application number: 06003808.0
(22) Date of filing: 24.02.2006
(51) Int. Cl.: G09G 5/10, H04N 5/58

(54) **Apparatus and method for adjusting picture characteristics of a display device**
Vorrichtung und Verfahren zur Einstellung der Bildeigenschaften auf einer Anzeigevorrichtung
Appareil et procédé de réglage des caractéristiques d'une image sur un dispositif d'affichage

(43) Date of publication of application: 29.08.2007
(73) Proprietor: Vestel Elektronik Sanayi ve Ticaret A.S., 45030 Manisa (TR)
(72) Inventor: Yilmazlar, Ismail, 45030, Manisa (TR); Unal, Olgun, 45030, Manisa (TR)
(74) Representative: HOFFMANN EITLE

(56) References cited:
- EP-A- 1 217 598

## Description

### FIELD OF THE INVENTION

The invention relates to an apparatus and a method for adjusting picture characteristics of a display device on the basis of light conditions in the vicinity of the display device. The invention is applicable for example for display devices such as CRT (Cathode Ray Tub), LCD (Liquid Crystal Display) or plasma displays.

In such a display device, picture characteristics, such as brightness, contrast, colour and sharpness, can be adjusted by a picture characteristics adjustment circuitry of the display device, as it is well known in the art. In order to allow also an automatic adjustment of the picture characteristics, it is common to provide a light sensor for measuring light in the vicinity of the display device and for outputting a corresponding light sensor signal based on which picture characteristics of the display device may be adjusted. Typically, such a light sensor is arranged somewhere in the vicinity of the display device, for example near the screen in the front panel of the display device.

The light sensor does not only have a sensitivity in the visible light spectrum but also in wavelength band of near infrared or infrared. Therefore the light sensor signal may not only indicate the actual light conditions around the display device in the visible light spectrum but it may also indicate other light components in the near infrared bend. Such near infrared bend components in the light sensor signal may be due for example to operating a remote control, the infrared light of which is also irradiated towards the front panel of the display device. Thus, unless other measures are taken - as explained below - the picture characteristics would not only be adjusted on the basis of the visible light conditions in the vicinity of the display device but also on the basis of possible additional radiation not relating at all to the light conditions prevailing in the vicinity of the display device.

The present invention aims at providing an apparatus and a method for providing a picture characteristics adjustment control signal to a picture characteristics adjustment circuitry of a display device which is only based on environmental light conditions and is not or as little as possible based on any additional radiation outside the visible light spectrum.

### BACKGROUND OF THE INVENTION

Since every display screen is watched by a human being, picture characteristics of a display device, such as brightness, contrast, colour and sharpness, should be adapted when the level of environmental visible light in the vicinity of the display screen changes. This can be done manually by the user on the changing environmental light conditions for achieving the best picture quality or alternatively by the automatic adjustment of the picture parameters with a picture characteristics adjustment circuitry which receives a picture characteristics adjustment control signal which is based on the output signal of a light sensor which measures the light in the vicinity of the display device.

However, as explained above, commercially available visible light sensors usually have a sensitivity range wider than the desirable range of visible light and may thus also cover with a certain sensitivity certain portions of IR light, i.e. instead of just detecting wavelength of approximately 380 to 780 nm, the light sensors may also detect light or radiation in the range of approximately 780 to 1100 nm in the near infrared region. As already mentioned above, it is not unusual that the display device is used in a consumer electronic product such as a TV which is controlled by a remote control device which typically transmits an IR signal in the vicinity of the visible light sensor. If such a signal is sent and if the visible light sensor is typically sensitive in the infrared wavelength range, the output light sensor signal is also a response due to the IR light such that the picture quality is adjusted erroneously.

If no IR filter is provided in front of the light sensor and if an IR signal is irradiated towards such a light sensor, the output signal of the light sensor may suddenly - during the emission of the IR remote control signal - show a high intensity (indicating to the picture characteristics adjustment circuitry very bright environmental light conditions) such that the picture characteristics adjustment circuitry will attempt to increase the brightness or the contrast on the display screen. This may cause an extremely uncomfortable feeling for the viewer, for example sitting in a darkened room, because suddenly, when operating the remote control, screen brightness or contrast will be increased to a large extent.

A conventional approach to this problem is to use a sharp cut-off IR blocking filter in front of the visible light sensor to reject infrared light and simultaneously have little loss in transmission at the desirable visible wavelengths. Alternatively, a combined IR blocking filter / light sensor package could be utilized in the housing of the display device. The IR blocking filter positioned before the visible light sensor allows only the visible light to impinge on the sensor, so that the sensor only generates the light sensor signal which is based on visible light conditions or changing visible light conditions, such that the picture parameters or the picture characteristics of the display device can be adjusted accordingly automatically.

Typically, the sensor required for the purpose of determining ambient light conditions could an LDR (Light Depending Resistor). Alternatively, the detection of the level of the ambient visible light could also be based on special integrated circuits dedicated for this purpose. Of course, as mentioned above both should be provided with a mechanical additional part, i.e. the IR blocking filter blocks the infrared light.

### BRIEF DESCRIPTION OF THE PRIOR ART

In the prior art, the problem of accurate adjustment of picture characteristics to ambient light changes has been addressed in many different patent publications and general prior art.

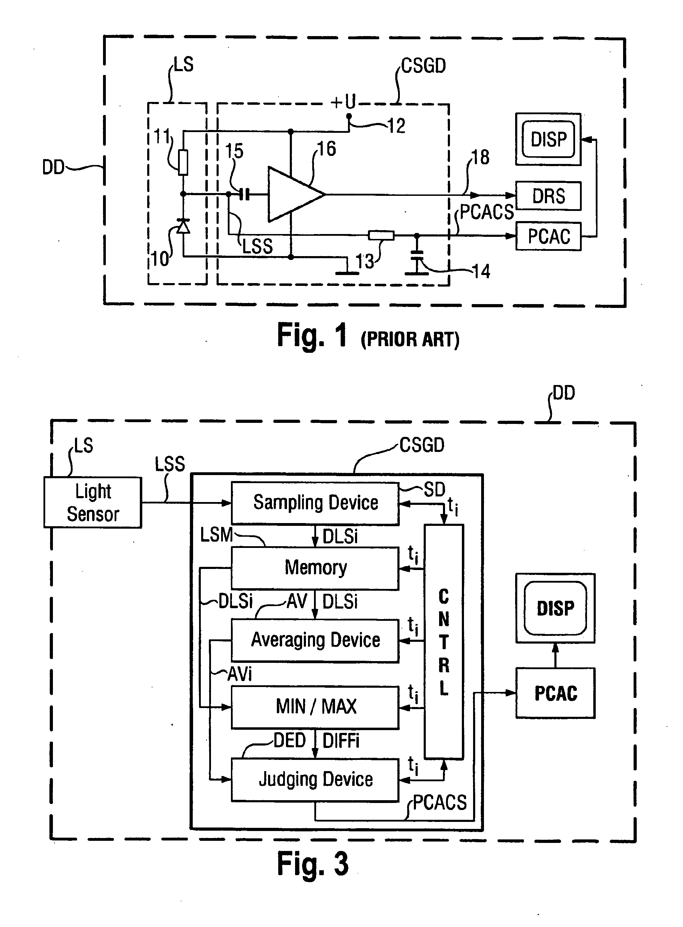

Fig. 1 of the attached drawings shows a typical prior art display device DD including a display DISP, a picture characteristics adjustment circuitry PCAC for adjusting picture characteristics such as brightness, contrast, colour and sharpness, a light sensor LS for measuring light in the vicinity of the display device DD and for outputting a corresponding light sensor signal LSS, and a picture characteristics adjustment control signal generation device CSGD for generating, on the basis of the light sensor signal LSS, a picture characteristics adjustment control signal PCACS corresponding to the ambient light portion of the light measured in the vicinity of that display device DD and which is applied to the picture characteristics adjustment circuitry PCAC of the display device DD. Such a display device DD is shown in Fig. 1 of the US patent Application Publication US 2004/0012719 A1. Instead of using an IR mechanical blocking filter, rapidly varying signal components of the light sensor signal LSS can pass through the capacitor 15 upstream of the operational amplifier 16 but are blocked by the low-pass filter 13, 14. The essentially constant signal components of the light sensor signal LSS are separated from the rapidly varying signal components because they are blocked by the capacitor 15 and are allowed to pass by the low-pass filter. The essentially constant signal components are proportional to the ambient brightness and can be fed to the picture characteristic adjustment circuitry PCAC of the display device DD. On the other hand, the signal 16 would correspond to rapidly varying signal such as typically used in a remote control IR signal, and would thus be applied to a decoder for such remote controlled signals indicated with DRS in Fig. 1 1. It should be noted that in the US patent Application Publication US 2004/0012719 A1 the aim is to allow the ambient brightness to be determined by means of a sensor that is already present in an image reproduction apparatus, for the reception of data or control signals (e.g. IR signals from a remote control) rather than with the provision with a specifically provided light sensor for ambient light measurement. Moreover, the accuracy of separation will depend by and large on the accuracy of the filter components 13, 14 and the capacitor 15 and furthermore it will dependent very much on the setting of the cut off frequency of the low-pass filter 13, 14 as to what is considered a fast varying signal (and thus a remote control signal) and what is regarded as visible light or visible light change. Furthermore, if there is a sudden change in a light conditions - for example when switching on the lamp in a room - the low-pass filter may have a certain delay such that the picture characteristics cannot be adjusted quickly. Therefore, this prior art may still be slow and slightly inaccurate as regards the distinction between fast varying infrared light form a remote control and essentially constant light from changing environmental conditions.

Japanese Patent Publication No. 2005176181 describes a display device in which the picture characteristics can be adjusted according to the lightness around the display device. In order to avoid that the lightness control is influenced by a signal from a remote control, the luminance adjustment control processing is interrupted if the reception of a remote control code of a remote control is detected. Therefore, in this device it is not possible to adjust picture characteristics simultaneously with the transmission of remote control IR signals.

US Patent Application Publication No. US 2005/0224703 A1 discloses a detector system in which a filter is positioned in front of a detector to selectively transmit light in such a way, that the combined filter/detector system closely matches a human eye response. However, the parts count is increased due to the additional provision of an IR filter. A similar solution is suggested in the Japanese Patent Application No. 58030288 which aims at compressing the variable range of intensity of illumination from outside and to enlarge the regulation range by installing a filter to the front of the filter receptor part of a filter conductive cell (light sensor) which is used to automatically regulate the contrast, etc. of a cathode ray tube. The filter is made of smoked acryl, etc. having a transmittance of about 1/30. Obviously, this type of filter does not only increase the parts count of the display device and the costs but also attenuates the signal to a large extent - also in the visible light range - such provision of filters in front of the light sensor is generally disadvantageous because it decreases the sensitivity.

The United States Patent No. US 6 292 228 B1 describes a device and method for automatically adjusting an image condition in a display. A photo sensor is used to detect the environmental illumination and a microprocessor utilizes the detected data to appropriately adjust the image condition with respect to a user preference. Herein, the average of an environmental illumination and an average of the environmental colour temperature is calculated and compared and on the basis of respective variations respective alterations are applied to the luminance, the contrast and the colour temperature.

For an ambient light-dependent video-signal processing method according to the United States Patent No. US 6 229 577 B1 an amount of ambient light is measured to obtain a measured amount of ambient light and a video signal is processed upon the measured amount of ambient light, wherein the video signal is substantially immediately processed when there is a large change in the measured amount of ambient light, whilst the video signal is delayed being processed until an occurrence of a scene change in the video signal when there is a small change in the measured amount of ambient light.

In the article by B. Ferguson,"Power Systems Design", Power Systems Design Europe, April 2004, pages 12-17, generally light sensor technology is described, in particular the use of visible light sensors in a PWM dimming system. This article also shows the sensitivity of commonly used sensors to the infrared wavelength region thus producing faulty control signals and a typical application of using an IR filter to ignore light outside the visible spectrum The article also mentions IC-based visible light detectors with spectral responses which emulate the human eye, e.g. the so-called semiconductor chip Microsemi IC LX 1970.

EP 1 217 598 A2 teaches an automatic brightness control system and method for a display device using a logarithmic sensor in which said sensor responds to ambient light near a lighted display of the device. A control circuit then selects, based on input from the sensor, a display luminance from one or more luminance adjustment sequences, wherein the display luminance is a fractional power function of the ambient light near the display.

### SUMMARY OF THE INVENTION

As explained above, the prior art handles the undesirable radiation of infrared light or near-infrared light by special analogue processing as in the aforementioned US Patent Application Publication US 2004/0012719 A1 or by the general placement of IR blocking filters to block unwanted IR light. The former leads to a rather inaccurate determination between fast varying light (IR remote control light) and ambient light change and the latter results in additional component cost and in increasing the designed complexity due to relatively difficult manufacturing processes since each IR blocking filter component needs to be assembled mechanically in the display device.

In view of the above described background and disadvantages of the prior art, the aim of the present invention is to provide an apparatus and method for adjusting picture characteristics of a display device which are capable to provide to a picture characteristics adjustment circuitry of a display device a picture characteristics adjustment control signal which is highly accurate - i.e. not influenced by other light components except for the visible light spectrum - and without the need to utilize an IR blocking filter in front of the visible light sensor.

In particular, the object to be solved by the invention is to provide an apparatus and a method for adjusting picture characteristics of a display device which allow the provision of a highly accurate picture characteristics adjustment control signal which is not influenced by light variations outside the visible light spectrum in a typical display device.

This object is solved by an apparatus for adjusting picture characteristics of a display device on the basis of light conditions in the vicinity of said display device, comprising a light sensor for measuring light in the vicinity of said display device and for outputting a corresponding light sensor signal; and a picture characteristics adjustment control signal generation device for generating, on the basis of said light sensor signal, a picture characteristics adjustment control signal corresponding to the ambient light portion of said light measured in the vicinity of said display device and to be applied to a picture characteristics adjustment circuitry of said display device; wherein said picture characteristics adjustment control signal generation device comprises a sampling device for successively sampling said light sensor signal and for outputting corresponding light sample values at successive sampling timings corresponding to a predefined sampling rate, a light sample value memory for storing, at each new sampling timing, a predetermined number of light sample values comprising a light sample value sampled at said new sampling timing and a predetermined plurality of light sample values sampled at previous sampling timings; an averaging device for calculating an average value of said predetermined number of stored light sample values at each said new sampling timing; a MIN/MAX difference determining device for determining, at each said new sampling timing, a difference value between a minimum value and a maximum value of said stored light sample values; and a difference judging device for judging, at each said new sampling timing, whether said difference value exceeds a predetermined threshold value and for using said average value to update said picture characteristics adjustment control signal, if said difference value is lower than said predetermined threshold value.

Preferably, said sampling device is formed by an A/D converter for converting said light sample values into digital light sample values.

Preferably, said difference judging device, for using said average value to update said picture characteristics adjustment control signal, sets said picture characteristics adjustment control signal to said average value if said difference value is lower than said threshold value, and keeps said picture characteristics adjustment control signal at its previous average value, if said difference value exceeds said predetermined threshold value at said new sampling timing.

Preferably, there is provided an average value monitoring device for detecting a change amount of said average value at each said new sampling timing, for multiplying said change amount by a gain factor of each picture characteristic, and for adding said multiplied change amount to the former value of the picture characteristic parameter corresponding to said picture characteristic.

Preferably, said sampling rate is 10 Hz, said predetermined number of light sample points is 10, and said threshold value is 1.29 Volts.

Preferably, said picture characteristics are selected from the group consisting of one or more of brightness, contrast, colour and sharpness.

Preferably, said display device is a CRT, LCD or a plasma display.

Preferably, said light sample value memory comprises a FILO memory.

The object is also solved by a display device including a picture characteristics adjustment circuitry for adjusting picture characteristics of said display device and an apparatus as mentioned above for outputting said picture characteristics adjustment control signal to said picture characteristics adjustment circuitry.

Furthermore, the object is solved by a method for adjusting picture characteristics of a display device on the basis of light conditions in the vicinity of said display device, comprising measuring light in the vicinity of said display device and for outputting a corresponding light sensor signal; and generating, on the basis of said light sensor signal, a picture characteristics adjustment control signal corresponding to the ambient light portion of said light measured in the vicinity of said display device and to be applied to a picture characteristics adjustment circuitry of said display device; wherein said step of generating said picture characteristics adjustment control signal comprises the following steps: successively sampling said light sensor signal and outputting corresponding light sample values at successive sampling timings corresponding to a predefined sampling rate; storing at each new sampling timing a predetermined number of light sample values, comprising a light sample value sampled at said new sampling timing and a predetermined plurality of light sample values sampled at previous sampling timings; in a light sample value memory; calculating an average value of said predetermined number of stored light sample values at each new sampling timing; determining, at each said new sampling timing, a difference value between a minimum value and a maximum value of said stored light sample values; judging, at each said new sampling timing, whether or not said difference value exceeds a predetermined threshold value, and using said average value to update said picture characteristics adjustment control signal, if said difference value is lower than said predetermined threshold value.

Preferably, for using said average value to update said picture characteristics adjustment control signal, there is a step for setting said picture characteristics adjustment control signal to said average value if said difference value is lower than said threshold value, and for keeping said picture characteristics adjustment control signal at its previous average value, if said difference value exceeds said predetermined threshold value at said new sampling timing.

Preferably, for using said average value to update said picture characteristics adjustment control signal, there is provided a step for detecting a change amount of said average value at each said new sampling timing, for multiplying said change amount by a gain factor of each picture characteristic, and for adding said multiplied change amount to the former value of the picture characteristic parameter corresponding to said picture characteristic.
Further advantageous embodiments and improvements of the invention are described in the dependent claims. Hereinafter, the invention will be described with reference to its advantageous embodiments and with reference to the attached drawings.

However, it is noted that the invention can comprise other embodiments resulting from the combination of features described and shown separately in the specification, the claims and the drawings.

### BRIEF DESCRIPTION OF THE DRAWINGS

In the drawings:
- **Fig. 1**: is a schematic diagram showing a display device DD incorporating a picture adjustment characteristics control signal generation device CSGD in accordance with the prior art;
- **Fig. 2**: is a general block diagram of a consumer electronics product, such as a TV incorporating in a housing H, processing sections MIC, T, PH, VP, DP necessary for the processing of a TV or video signal, as well as a light sensor LS;
- **Fig. 3**: is a block diagram of a display device DD including a picture characteristics adjustment control signal generation device CSGD in accordance with a first embodiment of the invention;
- **Fig. 4**: shows an embodiment of the sampling device SD shown in Fig. 3;
- **Fig. 5**: shows a display device including a picture characteristics adjustment circuitry PCAC and a picture characteristics adjustment control signal generation device CSGD in accordance with a second embodiment of the invention, incorporating an average value monitoring device AVMD;
- **Fig. 6**: shows a flowchart of the method in accordance with a first embodiment of the invention;
- **Fig. 7**: shows iteration processes of the processing in accordance with the method of the invention;
- **Fig. 8**: shows example contents of the light sample value memory LSM with corresponding light sample values DLSi for a iterations i=1 to i=5 (processes1-5); and
- **Figs. 9-1 to 9-5**: show successive sampling values for the processes 1 to 5 in Fig. 7 and 8.

Hereinafter, the invention will be explained with reference to its advantageous embodiments. Although the invention is described below with reference to its advantageous embodiments, with regard to a display device DD in the context of a TV apparatus, it should be noted that the invention is not restricted to the application to a TV apparatus. The invention may be employed in connection with any display device which has the capability of a picture characteristics adjustment.

### DESCRIPTION OF THE PRINCIPLE OF THE INVENTION

Fig. 3 shows a first embodiment in accordance with the principle of the invention for solving the above stated technical problem. Although Fig. 3 shows the entire display device DD incorporating a picture characteristics adjustment control signal generation device CSGD and a light sensor LS in accordance with the invention, it should be noted that the core aspect of the invention relates to the picture characteristics adjustment control signal generation device CSGD and this device CSGD may be used in connection with any kind of display device DD or other device the characteristics of which need to be adjusted in accordance with ambient light conditions. For example, the invention may find its application in the field of TV sets employing a display device, video cameras employing a display device, personal computers employing a display screen or any other consumer electronics product employing a display screen DISP as shown in Fig. 1.

Furthermore, it is envisible that the invention is used in other kinds of electronic devices in which some parameters need to be adjusted in accordance with ambient light conditions. For example, it is also envisible that the invention of the picture characteristics adjustment control signal generation device CSGD and the light sensor LS find application for adjusting the light intensity in rooms, departments, underground compartments or any other kind of space depending on the environmental light conditions if simultaneously there is the danger of a secondary radiation to which the light sensor is sensitive.

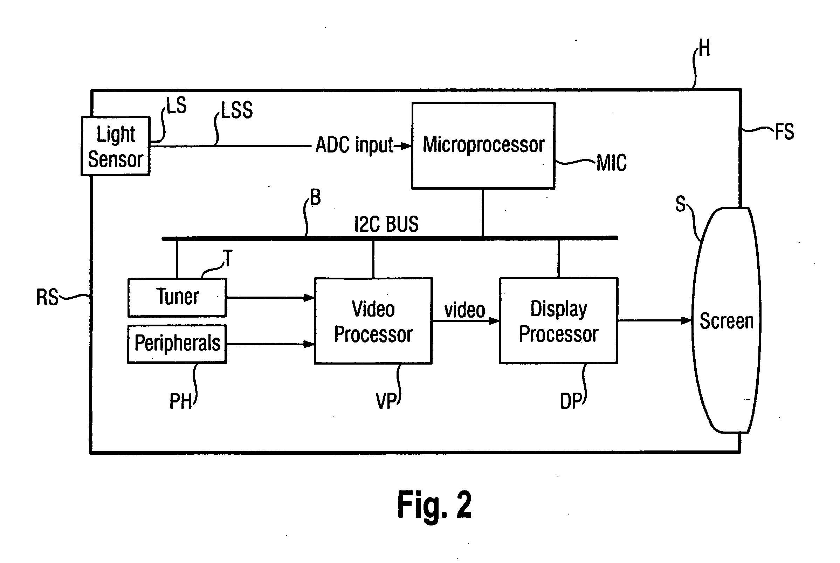

Fig. 2 shows a typical example of a consumer electronics product in which the invention may be used. Fig. 2 shows a block diagram of a television set having a housing H with a front side FS and a rear side RS. Furthermore, there is provided a tuner T, some peripherals PH connected to a video processor VP which outputs a video signal to a display processor DP which controls the display of an image on the screen S. The display processor DP, the video processor VP, and the tuner T are interconnected to the microprocessor MIC through a bus structure B, preferably an I2C BUS.

A light sensor LS for measuring the light in the vicinity of a display device, for example the screen S, is provided somewhere in the housing H, for example at the rear side RS or also at the front side FS. The apparatus and method in accordance with the invention for adjusting the picture characteristics of the display device on the basis of the light sensor signal LSS may be provided anywhere in the micro processor MIC, the video processor VP or the display processor DP. Preferably, the apparatus in accordance with the invention for adjusting picture characteristics of a display device may be provided in the microprocessor MIC.

### FIRST EMBODIMENT

Fig. 3 shows a first embodiment of the invention which could be used for a TV set as shown in Fig. 2. However, the first embodiment of the apparatus of the invention, as shown in Fig. 3 may also be applicable to any other kind of device as described above.

The apparatus for adjusting picture characteristics of a display device DD on the basis of light conditions in the vicinity of said display device DD comprises a light sensor LS for measuring light in the vicinity of the display device DD and for outputting a corresponding light sensor signal LSS. Although Fig. 2 shows the light sensor LS to be disposed in the rear portion RS of a TV set, it may be noted that the light sensor LS can be disposed at any portion of the consumer electronics product at which it can sense light conditions in the vicinity of the display device DD. Although the light sensor LS is shown to be part of the display device DD in Fig. 3, it may be situated in a separate unit external to the display device DD. The light sensor LS, in accordance with one embodiment of the invention, may be a photo detector, a photo transistor, a photo diode or any other kind of sensing device for sensing light in the visible light spectrum, i.e. a typical sensor having a wavelength sensitivity between 330 nanometers to 1100 nanometers, as mentioned above. Also, the light sensor LS may be placed near a sensor for receiving IR radiation, for example IR radiation from a remote control device.

Furthermore, there is provided a picture characteristics adjustment control signal generation device CSGD which receives the light sensor signal LSS from the light sensor LS. On the basis of the light sensor signal LSS the picture characteristics adjustment control signal generation device CSGD generates a picture characteristics adjustment control signal PCACS which is applied to a picture characteristics adjustment circuitry PCAC of the display device DD. The picture characteristics adjustment circuitry PCAC of the display device DD controls the display DISP, in particular it can adjust the picture characteristics such as brightness, contrast, colour and sharpness of the display device DISP. The picture characteristics adjustment control signal PCAS is generated by the device CSGD in such a manner that it corresponds to the ambient light portion of the light measured in the vicinity of the display device DD. That is, even if the light sensor LS might have a sensitivity region extending into the IR region, the signal PCACS, in accordance with the invention as explained below, will only account for the ambient light conditions or a change in the ambient light conditions. That is, it is not necessary that there is provided an IR filter in front of the light sensor LS. The device CSGD will produce a signal PCACS corresponding to the ambient light portion of the light measured in the vicinity of the display device DD only, even if no IR filter is applied to the light sensor LS.

Hereinafter, the special embodiment of the device CSGD and the method of the invention is explained with reference to Fig. 3, Fig. 5 and Fig. 6 in order to produce the signal PCACS.

As shown in Fig. 3, the picture characteristics adjustment control signal generation device CSGD comprises a sampling device SD, a light sample value memory LSM, an averaging device AV, a MIN/MAX difference determining device and a difference judging device DED. A control means CNTRL may be provided in order to coordinate the overall operation of the device CSGD, for example by issuing sampling timings ti to the individual devices SD, LSM, AV, MIN/MAX and DED. Although in Fig. 3, the devices SD, LSM, AV, MIN/MAX, DED have been illustrated as separate devices, the functions provided by them may be, depending on the actual real implementation, also provided by a single device or apparatus. Likewise, also the control device may be part of this single device or apparatus, such that in no way Fig. 3 should be viewed as limiting the invention to the special separate provision of devices or means as shown in the drawings.

The sampling device SD receives the light sensor signal LSS from the light sensor LS. Typically, if the light sensor LS is a photo diode, etc., the light sensor LS will output an analog light sensor signal LSS having a voltage level corresponding to the light intensity measured by the light sensor.

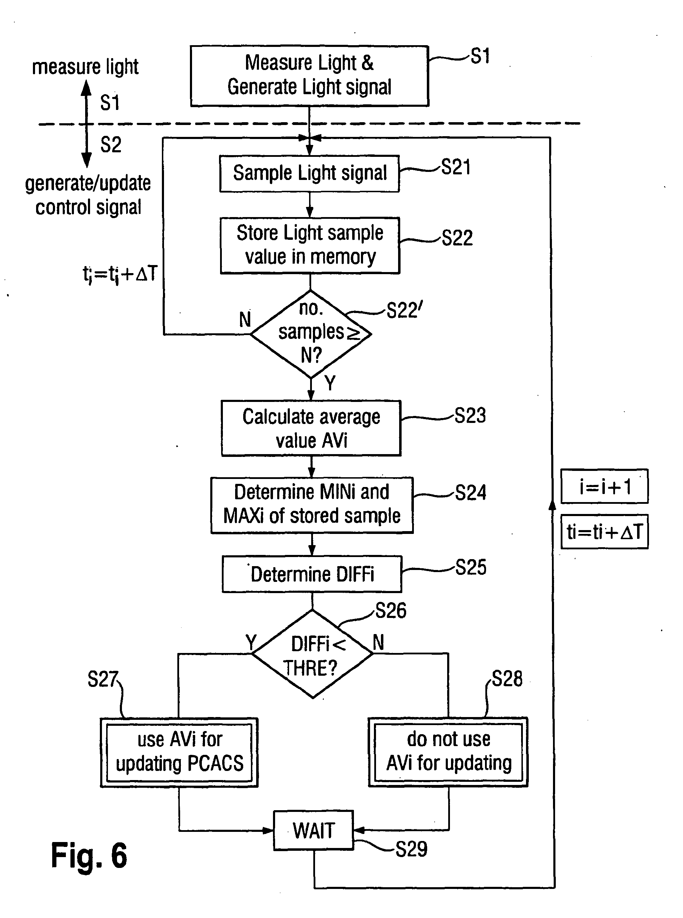

Hereinafter particular reference is also made to Fig. 6 describing the method for adjusting picture characteristics of the display device DD in accordance with the invention. As shown in Fig. 6, in principle there are two phases in the method, namely one phase "S1" in which the light is measured ("measure light") including step S1 and a second phase "S2" in which the control signal PCACS is generated/updated ("generation/update control signal") comprising steps S21, S22, S23, S24, S25, S26, S27, S28, S29.

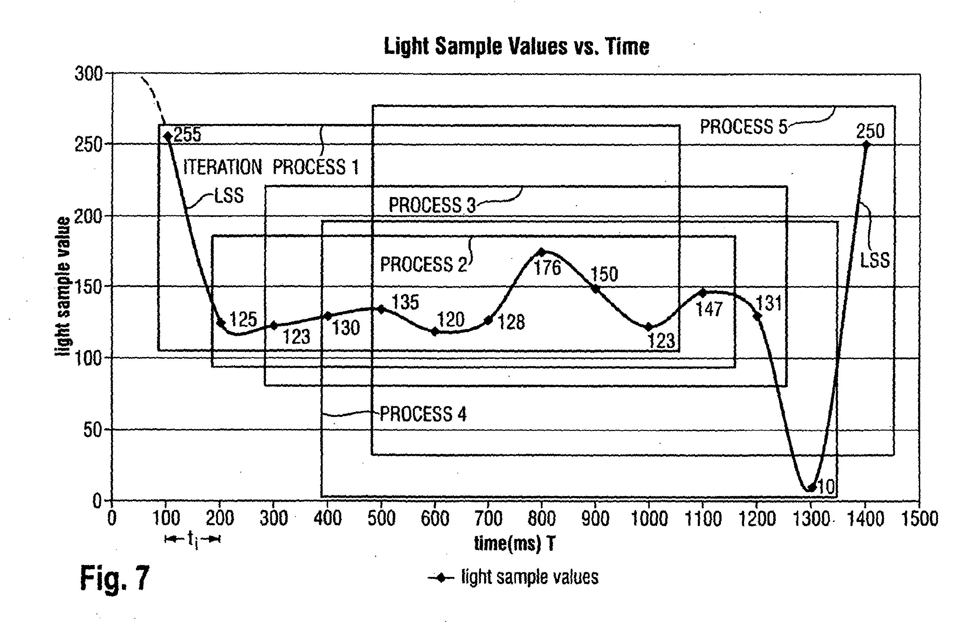

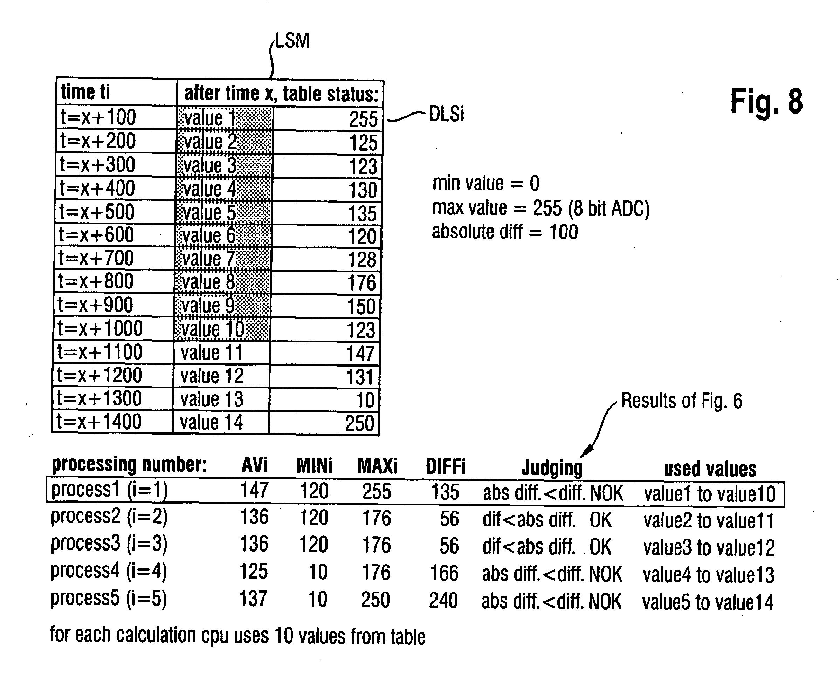

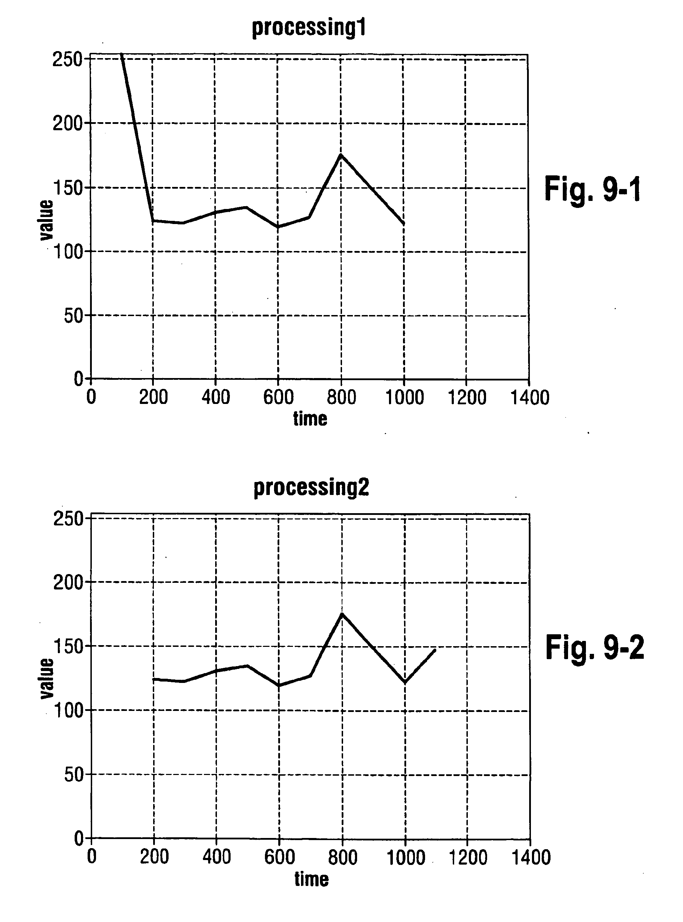

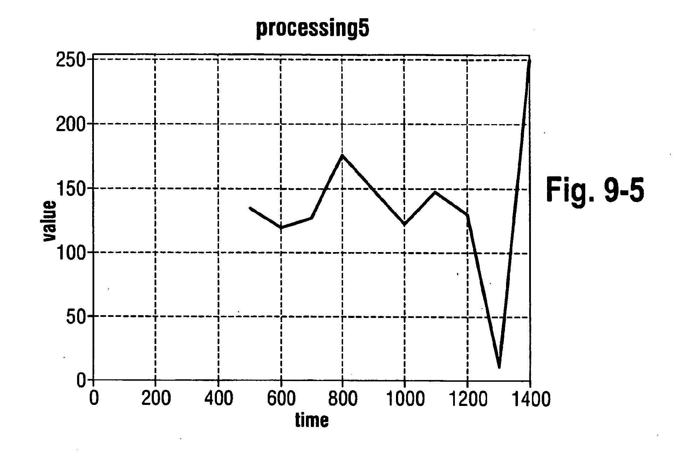

In step S1, the light sensor LS measures light in the vicinity display device DD and outputs continuously a corresponding light sensor signal SS which is received by the sampling device SD. Subsequently, viewing steps S21, S22, S23, S24, S25, S26, S27, S28, S29 collectively as a step S2, a picture characteristics adjustment control signal PCACS corresponding to the ambient light portion of said light measured in the vicinity of the display device DD and to be applied to the picture characteristics adjustment circuitry PCAC of the display device DD is generated in this step S2. It should be noted that in Fig. 6 each run through the loop S21-S29 may be seen as one of the iteration "processes1, 2, 3, 4, 5" as shown in Fig. 7. Fig. 7 shows the output signal (light sensor signal) LSS of the light sensor over time. Fig. 8 shows the contents of the light sample value memory LSM and Figs. 9-1 to 9-5 show light sample values stored in the light sample value memory LSM during each iteration, as will be explained below.

Hereinafter, the flowchart in Fig. 6 of the method of the first embodiment of the invention will be described with reference to Fig. 6 and Fig. 3 together with Fig. 7 and Fig. 8. As will be understood from Fig. 3, and from Fig. 7, the entire processing in step S2 of Fig. 6 is carried out with respect to sampling timings ti which correspond to a predetermined sampling rate. As can be seen from Fig. 7, a typical sampling rate is 10 Hz and the sampling timings are respectively tᵢ = 100 ms.

When step S2 is initiated for the first time, i.e. at timing T = 100 ms in Fig. 7, there exists the light sensor signal LSS continuously output by the light sensor LS and in step S21 the sampling device SD samples the light sensor signal LSS for the first time. The sampling device SD outputs a corresponding first light sample value, e.g. DLS1 = 255.

In step S22, the first light sample value DLS1 is stored in the light sample value memory LSM at the first sampling timing T = 100 ms.

Step S22' checks whether the number of samples light sample values DLSi in the light sample value memory LSM has reached a predetermined number N of light sample values DLSi. If this is not the case ("N" in step S22'), then the sub-loop of steps S21-S22-S22' is successively repeated until a predetermined number N of successively sampled light sample values DLS1 ... DLSN has been stored in the light sample value memory LSM.

As shown in Fig. 7 and Fig. 8, after having carried out steps S21-S22-S22' N times (in Fig. 7 and Fig. 8 e.g. N = 10), the light sample memory LSM contains the ten light sample values 255, 125, 123, 130, 135, 120, 128, 176, 150, 123 (see also "iteration process 1" in Fig. 7). The predetermined number N of light sample values are stored in the light sample memory LSM and step S22' results in "Y" ("Y" = Yes) and then step S23 is entered.

When entering step S23 for the first time, the light sample value memory LSM contains the first N light sample values DLS1 to DSL10 (called value1 to value10 in Fig. 8) stored at the first 10 sampling timings up to T = 1000 ms. Thus, steps S23-S29 always operate on a set of N light sample values DSLi and with each repetition of the main loop S21-S29 one new sample value will be added to the already existing N light sample values, e.g. a new sample value DSL11 at T = 1100 ms is the next sample value.

As will be described with more details below, therefore, step S23 always operates on the last N stored sampling values, i.e. the light sample value memory LSM always needs to have available a light sample value DLSi sampled at a new sampling timing ti and a predetermined plurality N-1 of light sample values DLSi sampled at previous sampling timings ti. That is, in the next iteration - called "process2" in Fig. 7 - the first sample value DLS1 = 255 is not needed any longer. In this respect, the light sample memory LSM may be a huge memory which is capable to store an almost unlimited number of values but a preferred embodiment of the light sample memory LSM is a so-called FILO memory (First-In-Last-Out memory). Whenever such a FILO memory receives a new light sample value DLSi, it will store this new sample value (e.g. in process 2, DLS11 = 147) in the memory LSM and will discard the oldest (in time) light sample value DLS1 = 255. That is, the FILO memory has a predetermined depth of N = 10 (predetermined number) sample values.

Hence, with each iteration "process1, 2, 3, 4, 5" step S23 has available the predetermined number, e.g. N = 10, newest (in time) sample values comprising the presently new light sample values sampled at a new sampling timing and a predetermined plurality (N.1) of previous light sample values sampled at previous sampling timings.

At the present sampling timing ti = 1000 ms, at which the light sample value memory LMS contains the predetermined number N (e.g. N=10) light sample values 255, 125, 123, 130, 135, 120, 128, 176, 150, 123 as shown in Fig. 8, an averaging device AV calculates in step S23 an average value AVi of said predetermined number of stored light sample values DLSi. At the same sampling timing ti = 1000 ms, a MIN/MAX difference determining device MIN/MAX determines a minimum value MINi, a maximum value MAXi and a difference value DIFFi between said minimum value MINi and said maximum value MAXi of said stored light sample values DLSi, in steps S24 and S25 in Fig. 6.

As indicated in the first line in Fig. 8, the first N (N = 10) light sample values have a minimum value MINi = 120, a maximum value MAXi = 255 and thus an average value of AVi = 147 (= ·Σ DLSᵢ/N).

In step S26 shown in Fig. 6 a difference judging device DED judges at the present sampling timing ti = 1000 ms whether the difference value DIFFi (=MAXi-MINi) = 135 exceeds a predetermined threshold value THRE. As indicated in Fig. 8, such a threshold value THRE could be for example an absolute difference value of 100. However, the threshold value may advantageously be also predetermined experimentally, for example depending on the special device for which the display characteristics need to be adjusted.

If the difference value DIFFi is lower than the predetermined threshold value THRE, then the average value AVi is used for updating the picture characteristics adjustment control signal PCACS ("Y" in step S26 and step 27). That is, if in step S26 the decision is that the difference value DIFFi is smaller than the threshold value THRE, i.e. the result is "Y", then in step S27 the average value AVi = 147 is used for updating the picture characteristics adjustment control signal PCACS. If the decision in step S26 is that the difference value DIFFi is greater or equal than the threshold value THRE, i.e. the decision is "N", then in step S28 the average value AVi is not used for the updating of the control signal PCACS.

As shown in Fig. 8, in "process 1", i.e. the first iteration i = 1, the difference value DIFFi = 135 is larger than the threshold or absolute difference of e.g. 100 which leads to the decision "N" such that the average value AVi is not used for updating the present control signal PCACS. Implicitly, this indicates that the variation over a number of sampling values or over a certain amount of time (10 sampling timings) is larger than what would be expected for variations corresponding to a pure ambient light change. That is, such a difference is considered to represent something else, e.g. remote control signals in the IR light range and not corresponding to the variations in the ambient light.

Preferably, if this is the case, i.e. if the difference value DIFFi exceeds said predetermined threshold value THRE, the control signal PCACS is kept at its previous average value AVi. Further preferably, if the difference judging device DED judges that the difference value DIFFi is lower than such threshold value THRE, it will set the control signal PCACS to the present average value AVi in order to update the picture characteristics adjustment control signal PCACS in step S27. In the first iteration process, i.e. when step S2 is carried out for the first time, if the average value is judged to be not to be used for updating picture parameters, e.g. there has not been set previously a value for the control signal PCACS, then one preferred example is that the initial values assigned before production for such parameters remain valid.

After steps S27 or S28, there is a waiting process in step S29 until the next successive sampling timing ti occurs from the control device CNTRL to obtain the next successive light sample value in step S21.

However, before coming to a discussion of the next successive iteration process, i.e. "process 2" for continuing with the next iteration i = 2, some further aspects of the invention with respect to the setting of the values will be explained. In principle, the sampling rate (for a TV a preferable value thereof may be 10 Hz), the predetermined of light sample points N (a preferred value thereof being N = 10) and the scale of the light sample values (an example with 256 values being shown as a preferred example in Fig. 7) may be selected and scaled depending on the special device whose picture characteristics need to be adjusted. For example, if the light sensor LS outputs predetermined voltage levels depending on ambient light changes, such voltage levels could be scaled before being compared with a predetermined threshold value THRE. Likewise, the sampling rate may be selected according to experimental tests to fit the best values and similarly the amount of sampling points N being processed (sampled, evaluated and averaged) in each process may be selected depending on the special display device etc. However, it is important that the number of sampling points N is fixed from iteration i to the next successive iteration i + 1, i.e. in each iteration the same amount of sampling points are evaluated and averaged.

Hereinafter, a preferred example for this selection of the values will be explained with reference to a display device DD used in a TV set, for example the TV set shown in Fig. 2. For example, in a TV set there is an item in the service menu called "input refresh time" or the like which describes which intervals shall be used for the sampling of values in respect of x10 ms. For example, if 10 is applied to this "input refresh time" input of the TV set, then the TV set will calculate measurements (will sample light values) at every 100 ms, which is the example in Fig. 7. Furthermore, a preferable light sample value memory LSM in a TV set is the aforementioned FILO memory. Therefore, in a TV set the sampling rate can be set via the "input refresh time" and a preferable value is 100 ms for the sampling timings corresponding of a sampling rate of 10 Hz.

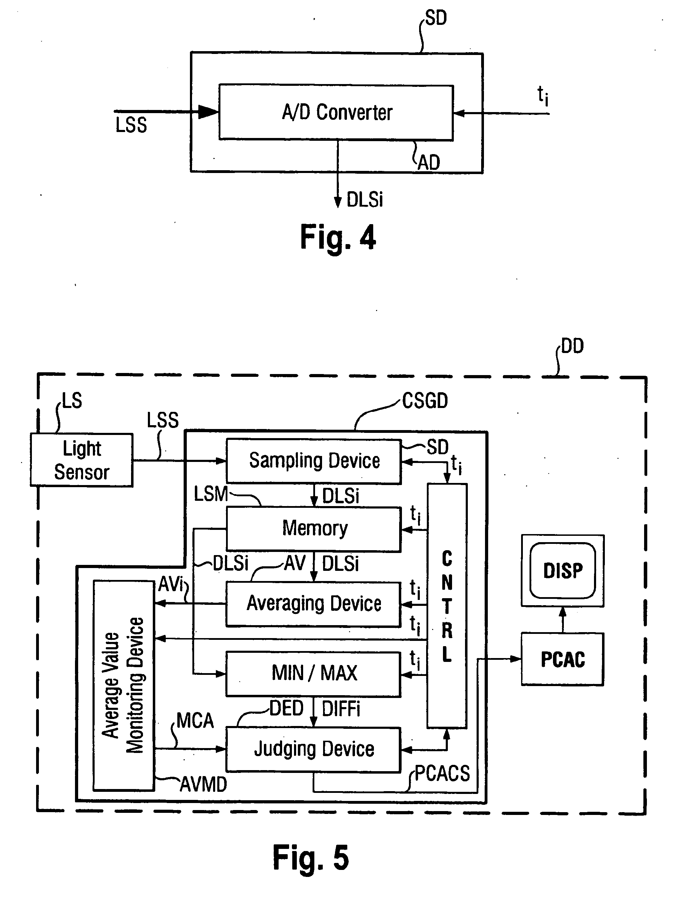

Whilst of course it is possible to compare any kind of value normalized or converted from the light sensor signal voltage, a preferred embodiment of the invention is to form the sampling device SD by an A/D converter AD for converting the essentially analogue light sample signal into digital light sample values, as shown in Fig. 4. Such an A/D converter may be part of the TV microprocessor MIC which has an ADC input port with the ability to convert an input analogue voltage to 8 bit digital data. For example, assuming an input analogue voltage range of the light sensor signal to be 0-3.3 V and this voltage range is converted to 8 bit digital data (0-255), a single step in the 8 bit digital data corresponds to 3.3V/255 = 12,9 millivolt of the input analogue signal. Thus, if the threshold value is set to the absolute difference = 100, this threshold voltage THRE could correspond to 100/255 * 3,3 V (approximately to 1.29 V) for the threshold voltage. Therefore, the example shown in Fig. 7 and Fig. 8 corresponds regarding the value selection to a predetermined embodiment where the A/D converter has a 8 bit resolution leading to 255 different values wherein each digital value change corresponds to an analogue voltage change of 12,9 mV if the complete analogue voltage range is 0-3.3 V which is typical for a light sensor signal output from an analogue light sensor LS in the form of a photodiode or phototransistor. However, from the above description, it can easily be devised by a skilled person that other values may be used depending on the resolution of the A/D converter and the input analogue voltage range of the light sensor LS. A preferred example is shown in Fig. 7 and Fig. 8.

Furthermore, it will be understood from the aforementioned example that the setting, using and updating of the picture characteristics adjustment control signal PCACS will also have to be done depending on the special application. For example, in the example in Fig. 7 and Fig. 8, the control signal PCACS will be maintained at its previous value AVi in case of "N" in step S26. If "Y" in step S26, the control signal PCACS is set to the presently determined average value AVi, e.g. to AVi = 136 in the "process 2" described hereinafter.

When step S2 is carried out for the first time, leading to the accumulation of 10 sampling values in the sub-loop S21-S22-S22' and their evaluation up to T = 1100 ms in the outer loop in steps S23, S24, S25, S26, there has not been set previously a value for the control signal PCACS. Therefore, since during the first iteration (process 1) the decision in step S26 is "N", there is no previously set average value AVi at which the control signal PCACS could be kept. Therefore, there are two possibilities in "iteration process 1" if the answer of decision step S26 is "N". One possibility is to use an artificially created control signal value and a second possibility is to disregards the entire "iteration process 1" in case of step S26 resulting into "N") and wait for a setting of the control signal PCACS when for the first time decision step S26 leads to "Y". This would for example be the case in "iteration process 2" in the example in Fig. 8 in which the difference value = 56 is smaller than the threshold value = 100 such that the control signal PCACS is set to the average value AVi = 136 for the first time.

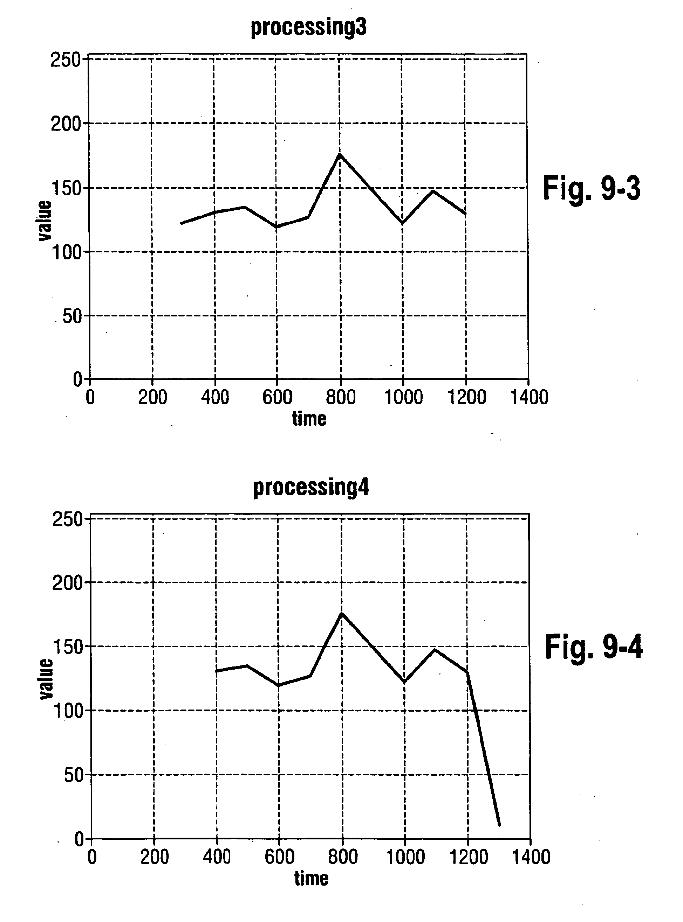

In the successive next iteration i = 2, the sampling device SD obtains a new light sample value DLS11 = 147 at the next timing T = 1100 in step S21 and this value is stored in the light sample memory LSM in step S22. In any case, the light sample value memory LSM may contain, at the new sampling timing T = 1100 ms, the present new light sample value DSL11 = 147 and the predetermined plurality of the previous light sample values DLS10-DLS2, e.g. at least the values 123, 150, 176, 128, 120, 135, 130, 123, 125 and possibly, depending on the type of memory used also the first light sample value DSL1 = 255 (which is, however, not needed in the further iteration processes; that is even if the number of points to be averaged is always the same in each iteration, the earlier values may be stored for whatever statistical or evaluation or record purpose if one has a huge memory). Since light sample values of the past being earlier than N sampling values including the new sample value are of no interest in the further successive iterations, a preferred example for the memory LSM is the FILO memory described above. If the FILO memory LSM has a predetermined depth of N, e.g. N = 10, each new storage of a new value DLS11 = 147 will lead to the pushing-out of the earliest sampling value DLS1 = 255 such that only N = 10 light sample values will be contained in the memory (they are respectively framed in Fig. 7 and also are shown in Fig. 9). Therefore, the values shown in the window frames of the "processes" in Fig. 7 correspond to the actual contents of the FILO memory and correspond to the actual number of sampling values which are used for the evaluation in the respective next iteration.

As shown in Fig. 8, in "process 2" (i = 2) the average value AVi = 136 is obtained by the averaging device AV and the difference value obtained by subtracting the minimum value MINi = 120 from the maximum value MAXi = 176 is DIFF2 = 56. Therefore, in the "process 2" the judging step S26 leads to the determination "Y" and preferably the control signal PCACS is set to the average value AVi = 136. Then, the next successive iteration process "process 3" is started. There is yet again a new sampling value DLS12 = 131 obtained in step S21 and stored in S22. The average value is yet again AVi = 136 and a difference value DIFFi = 56. Therefore, again the average value AVi is used for setting the control signal PCACS, such that the control signal PCACS is set to the average signal AVi in step S27.

In the next iteration process 4 (i = 4) there is a very large difference DIFFi = 166 because the next sampling value at T = 1300 ms is DLS13 = 10 indicating a large change in the signal. The judging step S26 leads to "N" and preferably the control signal PCACS is kept at its previous value of 136 because the difference value DIFFi = 166 is much larger than the threshold value (absolute difference) of 100. Similarly, in "process 5" (i = 5) a new sampling value DLS14 = 250 leads to a large change in the signal which most likely does not result from a change in the ambient light and therefore once again the control signal PCACS is kept at the previous level of AVi = 136 (= AV3).

Therefore, the successive iteration in Fig. 6 is continued indefinitely until the TV set or display device DD is switched off. Whilst in principle the TV set may be left running for several hours, in principle the memory could store all the sampled light sample values although the values in the past are of no use. However, a large memory may be capable of storing all such values for statistics purposes. However, more preferred is the use of the FILO memory such that only the presently needed N values are stored.

For illustration purposes, Figs. 9-1 to 9-5 show the respective "process 1" to "process 5" as described with the values in Fig. 8. Hence, each of the Figs. 9-1 to 9-5 respectively show the window of the signal values which are evaluated with respect to their variation. As can be seen from Fig. 9, in the present invention a moving window is shifted over the signal such that a certain amount of the past variation is accounted for together with each newly occurring variation at a new iteration timing. That is, not simply a large change in a single newly occurring value will be determined as not corresponding to an ambient light change but only this change in combination with the past "history" will determine whether the change in the light sensor signal corresponds to an ambient light signal change or for example to a remote control signal. Thus, the present invention very accurately sets the control signal PCACS because a large variation per se at a newly occurring sampling timing will not per se - without considering the past - correspond to a remote control signal.

The technique is also different from the above described document US 2004/0012715 A1 shown in Fig. 1 (prior art) because in the present invention even a sudden and abrupt change of the light sensor signal will immediately be detected whilst in Fig. 1 there are delayed inaccuracies due to the integrating function of the low-pass filter which need to integrate a certain number of values over time before an output is generated. Thus, also by contrast to Fig. 1 the present invention is fast responding and more accurate.

### Second embodiment

Hereinbefore, it was described that there is the possibility to simply set the control signal PCACS to the average value AVi if the difference value DIFFi is lower than the threshold value THRE, in step S27 in Fig. 6. However, there are also other methods of setting the control signal PCACS in case of "Y" in step S26, i.e. if the average signal AVi is used for updating the control signal PCACS in step S27.

As shown in Fig. 5, in addition to the devices shown in Fig. 3, there may be provided an average value monitoring device AVMD for detecting a change amount CAi of the average value AVi at each new sampling timing ti with respect to the average value Avi-1 at the previous sampling timing ti-1. For example, in "process 2" the change amount CAi = 147 - 136 = 11.

The average.value monitoring device AVMD can multiply this change amount CAi = 11 by a gain factor GFi of each picture characteristic and can add the multiplied change amount MCAi to the former value of the picture characteristics parameter corresponding to said picture characteristic. In this case, the change of the average value AVi can additionally be used for updating the control signal PCACS.

It should also be noted that during the control process of picture parameters, if at any time the user sets the value(s) of the parameter(s) manually, the automatic adjustment of picture parameters is carried on over the newly set values by the user, e.g. the multiplied change amount MCAi of the average value is added to the newly set (by the user) value of the relevant parameter.

### INDUSTRIAL APPLICABILITY

As explained above, in the present invention the need for an inclusion of a separate IR blocking filter before the visible light sensor is avoided because the present invention includes a special algorithm to distinguish between a real ambient light change and an IR signal generated e.g. from a remote control device in the vicinity of the visible light sensor. In order to decide whether there has been a real change in ambient light conditions around the display device a difference calculated between updated max and min values of N measured values is compared to predefined reasonable values representative of maximum reasonable change level for a real ambient light change. If the difference is less than the predetermined reasonable value this brings about a real ambient light change determination and if the calculated average value is greater than the predefined reasonable value this reveals that the visible light sensor has produced some abnormal value due to the reception of IR signals generated before the sensor. In this case an average value calculated after the last measurement should not be taken into consideration to update the picture characteristics. Thus, it is possible to highly accurately cause the picture characteristics not to be influenced by the IR signals without the use of separate IR blocking filters in front of the visible light sensor.

Finally, it should be noted that in principle the algorithm of the invention could also be used to actively detect IR light and distinguish this IR light from an ambient light changes. For example, in a device it may be necessary to detect the occurrence of an IR light by contrast to the detection of a slowly varying ambient light change. Depending on the determination processes shown in Fig. 8 and step S26, the decision in step S26 can also be used to actively indicate the occurrence of "IR light". This would entail that "N" in step S26 of course indicates the occurrence of IR signals requiring that the threshold value THRE is related somehow to represent a threshold for the IR signal detection. Such a threshold value THRE can again be determined experimentally. Also, the steps S27, S28 should be exchanged and an appropriate determination of a new PCACS must be done for the case of IR signal detection. Such an algorithm may be advantageously used also in other devices not using a display device or any other device where such an action needs to be taken purely due to the occurrence of IR light.

It should be noted that the skilled person - on the basis of the present description, the drawings and the claims - can devise other embodiments of the invention. However, all such embodiments, variations and modifications of the invention are contained within the scope of the attached claims. Reference numerals in the claims only serve illustration purposes and do not limit the scope of these claims.

## Claims

1. An apparatus for adjusting picture characteristics of a display device (DD) on the basis of light conditions in the vicinity of said display device (DD), comprising:
**a)** a light sensor (LS) for measuring light in the vicinity of said display device (DD) and for outputting a corresponding light sensor signal (LSS); and
**b)** a picture characteristics adjustment control signal generation device (CSGD) for generating, on the basis of said light sensor signal (LSS), a picture characteristics adjustment control signal (PCACS) corresponding to the ambient light portion of said light measured in the vicinity of said display device (DD) and to be applied to a picture characteristics adjustment circuitry (PCAC) of said display device (DD);
***characterized in that***
**c)** said picture characteristics adjustment control signal generation device (CDGD) comprises:
**c1)** a sampling device (SD) for successively sampling said light sensor signal (LSS) and for outputting corresponding light ample values (DLSi) at successive sampling timings (tᵢ) corresponding to a predefined sampling rate;
**c2)** a light sample value memory (LSM) for storing, at each new sampling timing (tᵢ), a predetermined number of light sample values (DLSi) comprising a light sample value (DLSI) sampled at said new sampling timing (tᵢ) and a predetermined plurality of light sample values (DLSi) sampled at previous sampling timings (tᵢ);
**c3)** an averaging device (AV) for calculating an average value (AVi) of said predetermined number of stored light sample values (DLSi), at each said new sampling timing (tᵢ);
**c4)** a MIN/MAX difference determining device (MIMA) for determining, at each said new sampling timing (tᵢ), a difference value (DIFFi) between a minimum value and a maximum value (MINi, MAXi) of said stored light sample values (LSIi); and
**c5)** a difference judging device (DED) for judging, at each said new sampling timing (tᵢ), whether said difference value (DIFFi) exceeds a predetermined threshold value (THRE) and for using said average value (AVi) to update said picture characteristics adjustment control signal (PCACS), if said difference value (DIFFi) is lower than said predetermined threshold value (THRE).

2. An apparatus according to claim 1,
***characterized in that***
said sampling device (SD) is formed by an A/D converter (AD) for converting said light sensor signal (LSS) into digital light sample values (DLSi).

3. An apparatus according to claim 1,
***characterized in that***
said difference judging device (DED), for using said average value (AVi) to update said picture characteristics adjustment control signal (PCACS), sets said picture characteristics adjustment control signal (PCACS) to said average value (AVi) if said difference value (DIFFi) is lower than said threshold value (THRE), and keeps said picture characteristics adjustment control signal (PCACS) at its previous average value (AVi), if said difference value (DIFFi) exceeds said predetermined threshold value (THRE) at said new sampling timing (tᵢ).

4. An apparatus according to claim 1,
***characterized by***
an average value monitoring device (AVMD) for detecting a change amount (CAi) of said average value (AVi) at each said new sampling timing (tᵢ), for multiplying said change amount (CAi) by a gain factor (GFi) of each picture characteristic, and for adding said multiplied change amount (MCAi) to the former value of the picture characteristic parameter corresponding to said picture characteristic.

5. An apparatus according to claim 1,
***characterized in that***
said sampling rate is 10 Hz, said predetermined number of light sample points (LSP) is 10, and said threshold value is 1.29 Volts.

6. An apparatus according to claim 1,
***characterized in that***
said display device (DD) is a CRT, LCD or a plasma display.

7. An apparatus according to claim 1,
***characterized in that***
said light sample value memory (LSM) comprises a FILO memory (FILO).

8. An apparatus according to.claim 1,
***characterized in that***
said picture characteristics are selected from the group consisting of one or more of brightness, contrast, colour and sharpness.

9. A display device (DD) including a picture characteristics adjustment circuitry (PCAC) for adjusting picture characteristics of said display device (DD) and an apparatus according to one or more of claims 1 to 8 for outputting said picture characteristics adjustment control signal (PCACS) to said picture characteristics adjustment circuitry (PCAC).

10. A method for adjusting picture characteristics of a display device (DD) on the basis of light conditions in the vicinity of said display device (DD), comprising:
**a)** measuring (S1), light in the vicinity of said display device (DD) and for outputting a corresponding light sensor signal (LSS); and
**b)** generating (S2), on the basis of said light sensor signal (LSS), a picture characteristics adjustment control signal (PCACS) corresponding to the ambient light portion of said light measured in the vicinity of said display device (DD) and to be applied to a picture characteristics adjustment circuitry (PCAC) of said display device (DD);
***characterized in that***
**c)** step b) for generating said picture characteristics adjustment control signal (PCACS) comprises the following steps:
**c1)** successively sampling (S21) said light sensor signal (LSS) and outputting (S21) corresponding light sample values (DLSi) at successive sampling timings (tᵢ) corresponding to a predefined sampling rate;
**c2)** storing (S22) at each new sampling timing (tᵢ) a predetermined number of light sample values (DLSi), comprising a light sample value (DLSI) sampled at said new sampling timing and a predetermined plurality of light sample values (DLSi) sampled at previous sampling timings (tᵢ), in a light sample value memory (LSM);
**c3)** calculating (S23) an average value (AVi) of said predetermined number of stored light sample values (DLSi) at each new sampling timing (tᵢ);
**c4)** determining (S24, S25), at each said new sampling timing (tᵢ), a difference value (DIFFi) between a minimum value and a maximum value (MINi,MAXi) of said stored light sample values (DLSi);
**c51)** judging (S25), at each said new sampling timing (tᵢ), whether or not said difference value (DIFFi) exceeds a predetermined threshold value (THRE), and
**c52)** using (S27) said average value (AVi) to update said picture characteristics adjustment control signal (PCACS), if said difference value (DIFFi) is lower than said predetermined threshold value (THRE).

11. A method according to claim 10,
***characterized in that***
said step c52), for using said average value (AVi) to update said picture characteristics adjustment control signal (PCACS), sets said picture characteristics adjustment control signal (PCACS) to said average value (AVi), if said difference value (DIFFi) is lower than said threshold value (THRE), and keeps said picture characteristics adjustment control signal (PCACS) at its previous average value (AV), if said difference value (DIFF) exceeds said predetermined threshold value (THRE) at said new sampling timing.

12. A method according to claim 10,
***characterized in that***
said step c52) comprises, for using said average value (AVi) to update said picture characteristics adjustment control signal (PCACS), a step for detecting a change amount (CAi) of said average value (AVi) at each said new sampling timing (tᵢ), for multiplying said change amount (CAi) by a gain factor (GF) of each picture characteristic, and for adding said multiplied change amount (MCAi) to the former value of the picture characteristic parameter corresponding to said picture characteristic.

## Patentansprüche

1. Apparatur zum Einstellen von Bildcharakteristika einer Anzeigevorrichtung (DD) auf Basis von Lichtbedingungen in der Umgebung der Anzeigevorrichtung (DD), umfassend:
a) einen Lichtsensor (LS) zum Messen von Licht in der Nähe der Anzeigevorrichtung (DD) und zum Ausgeben eines entsprechenden Lichtsensorsignales (LSS); und
b) eine Bildcharakteristika-Einstellsteuersignal-Erzeugungsvorrichtung (CSGD) zum Erzeugen, auf Basis des Lichtsensorsignals (LSS), eines Bildcharakteristika-Einstellsteuersignals (PCACS), das dem Umgebungslichtanteil des in der Umgebung der Anzeigevorrichtung (DD) gemessenen Lichtes entspricht und das an eine Bildcharakteristika-Einstellschaltung (PCAC) der Anzeigevorrichtung (DD) anzulegen ist;
**gekennzeichnet dadurch, dass**
c) die Bildcharakteristika-Einstellsteuersignal-Erzeugungsvorrichtung (CSGD) umfasst:
c1) eine Abtastvorrichtung (SD) zum sukzessiven Abtasten des Lichtsensorsignals (LSS) und zum Ausgeben entsprechender Lichtabtastwerte (DLSi) zu aufeinander folgenden Abtastzeitpunkten (ti) entsprechend einer vorgegebenen Abtastrate;
c2) einen Lichtabtastwertspeicher (LSM) zum Speichern, zu jedem neuen Abtastzeitpunkt (tᵢ), einer vorgegebenen Anzahl von Lichtabtastwerten (DLSi), die einen zu dem gegebenen neuen Abtastzeitpunkt (ti) abgetasteten Lichtabtastwert (DLSi) und eine zu vorherigen Abtastzeitpunkten (ti) abgetastete vorgegebene Mehrzahl von Lichtabtastwerten (DLSi) umfasst;
c3) eine Mittelungsvorrichung (AV) zum Berechnen eines Mittelwertes (AVi) der vorgegebenen Anzahl von gespeicherten Lichtabtastwerten (DLSi) zu jedem neuen Abtastzeitpunkt (tᵢ);
c4) eine MIN/MAX-Differenzbestimmungsvorrichtung (MIMA) zum Bestimmen, zu jedem neuen Abtastzeitpunkt (tᵢ), eines Differenzwerts (DIFFi) zwischen einem Minimalwert und einem Maximalwert (MINi, MAXi) der gespeicherten Lichtabtastwerte (LSIi); und
c5) eine Differenzentscheidungsvorrichtung (DED) zum Entscheiden, zu jedem neuen Abtastzeitpunkt (tᵢ), ob der Differenzwert (DIFFi) einen vorgegebenen Schwellenwert (THRE) übersteigt und zur Verwendung des Durchschnittswertes (AVi) zum Aktualisieren des Bildcharakteristika-Einstellsteuersignales (PCACS), falls der Differenzwert (DIFFi) niedriger als der vorgegebene Schwellenwert (THRE) ist.

2. Apparatur gemäß Anspruch 1, **dadurch gekennzeichnet, dass**
die Abtastvorrichtung (SD) durch einen A/D-Wandler (AD) zum Wandeln des Lichtsensorsignals (LSS) zu digitalen Lichtabtastwerten (DLSi) gebildet wird.

3. Apparatur gemäß Anspruch 1, **dadurch gekennzeichnet, dass**
die Differenzentscheidungsvorrichtung (DED) zur Verwendung des Durchschnittswertes (AVi) zur Aktualisierung des Bildcharakteristika-Einstellsteuersignales (PCACS) das Bildcharakteristika-Einstellsteuersignal (PCACS) auf den Durchschnittswert (AVi) einstellt, falls der Differenzwert (DIFFi) niedriger als der Schwellenwert (THRE) ist und das Bildcharakteristika-Einstellsteuersignal (PCACS) auf seinem vorherigen Durchschnittwert (AVi) belässt, falls der Differenzwert (DIFFi) den vorgegebenen Schwellenwert (THRE) zum neuen Abtastzeitpunkt (ti) übersteigt.

4. Apparatur gemäß Anspruch 1, **gekennzeichnet durch**
eine Durchschnittswertüberwachungsvorrichtung (AVMD) zum Detektieren eines Änderungsbetrags (CAi) des Durchschnittswertes (AVi) zu jedem neuen Abtastzeitpunkt (tᵢ), zum Multiplizieren des Änderungsbetrags (CAi) mit einem Verstärkungsfaktor (GFi) jeder Bildcharakteristik und zum Addieren des multiplizierten Änderungsbetrags (MCAi) und des früheren Werts des Bildcharakteristikparameters, der der Bildcharakteristik entspricht.

5. Apparatur gemäß Anspruch 1, **dadurch gekennzeichnet, dass**
die Abtastrate 10 Hz ist, die vorgegebene Anzahl von Lichtabtastpunkten (LSP) 10 ist und der Schwellenwert 1,29 Volt ist.

6. Apparatur gemäß Anspruch 1, **dadurch gekennzeichnet, dass**
die Anzeigevorrichtung (DD) eine Kathodenstrahlröhren-, LCD- oder Plasma-Anzeige ist.

7. Apparatur gemäß Anspruch 1, **dadurch gekennzeichnet, dass**
der Lichtabtastwertspeicher (LSM) einen FILO-Speicher (FILO) umfasst.

8. Apparatur gemäß Anspruch 1, **dadurch gekennzeichnet, dass**
die Bildcharakteristika aus der Gruppe ausgewählt werden, die aus Helligkeit, Kontrast, Farbe und/oder Schärfe besteht.

9. Anzeigevorrichtung (DD), die eine Bildcharakteristika-Einstellschaltung (PCAC) zum Einstellen von Bildcharakteristika der Anzeigevorrichtung (DD) und eine Apparatur gemäß einem oder mehreren der Ansprüche 1 bis 8 beinhaltet, zum Ausgeben des Bildcharakteristika-Einstellsteuersignals (PCACS) an die Bildcharakteristika-Einstellschaltung (PCAC).

10. Verfahren zum Einstellen von Bildcharakteristika einer Anzeigevorrichtung (DD) auf Basis von Lichtbedingungen in der Umgebung der Anzeigevorrichtung (DD), umfassend:
a) Messen (S1) von Licht in der Nähe der Anzeigevorrichtung und Ausgeben eines entsprechenden Lichtsensorsignals (LSS); und
b) Erzeugen (S2), auf Basis des Lichtsensorsignals (LSS), eines Bildcharakteristika-Einstellsteuersignals (PCACS) entsprechend dem Umgebungslichtanteil des in der Umgebung der Anzeigevorrichtung (DD) gemessenen Lichtes, das an eine Bildcharakteristika-Einstellschaltung (PCAC) der Anzeigevorrichtung (DD) anzulegen ist;
**dadurch gekennzeichnet, dass**
c) Schritt b) zum Erzeugen des Bildcharakteristika-Einstellsteuersignals (PCACS) die folgenden Schritte umfasst:
c1) sukzessives Abtasten (S21) des Lichtsensorsignals (LSS) und Ausgeben (S21) entsprechender Lichtabtastwerte (DLSi) zu aufeinander folgenden Abtastzeitpunkten (tᵢ), die einer vorgegebenen Abtastrate entsprechen;
c2) Speichern (S22), zu jedem neuen Abtastzeitpunkt (tᵢ), einer vorgegebenen Anzahl von Lichtabtastwerten (DLSi), umfassend einen Lichtabtastwert (DLSi), der zu jedem neuen Abtastzeitpunkt abgetastet wird, und einer vorgegebenen Mehrzahl von Lichtabtastwerten (DLSi), die zu vorherigen Abtastzeitpunkten (ti) abgetastet sind, in einem Lichtabtastwertspeicher (LSM);
c3) Berechnen (S23) eines Durchschnittswertes (AVi) der vorgegebenen Anzahl von gespeicherten Lichtabtastwerten (DLSi) zu jedem neuen Abtastzeitpunkt (tᵢ);
c4) Bestimmen (S24, S25), zu jedem neuen Abtastzeitpunkt (tᵢ), eines Differenzwerts (DIFFi) zwischen einem Minimalwert und einem Maximalwert (MINi, MAXi) der gespeicherten Lichtabtastwerte (DLSi);
c51) Entscheiden (S25), zu jedem neuen Abtastzeitpunkt (tᵢ), ob der Differenzwert (DIFFi) einen vorgegebenen Schwellenwert (THRE) übersteigt oder nicht, und
c52) Verwenden (S27) des Durchschnittswerts (AVi) zum Aktualisieren des Bildcharakteristika-Einstellsteuersignals (PCACs), falls der Differenzwert (DIFFi) niedriger als der vorgegebene Schwellenwert (THRE) ist.

11. Verfahren gemäß Anspruch 10, **dadurch gekennzeichnet, dass**
der Schritt c52) zur Verwendung des Durchschnittswerts (AVi) zum Aktualisieren des Bildcharakteristika-Einstellsteuersignals (PCACS), das Bildcharakteristika-Einstellsteuersignal (PCACS) auf den Durchschnittswert (AVi) einstellt, falls der Differenzwert (DIFFi) niedriger als der Schwellenwert (THRE) ist, und das Bildcharakteristika-Einstellsteuersignal (PCACS) auf seinem vorherigen Durchschnittswert (AV) belässt, falls der Differenzwert (DIFF) den vorgegebenen Schwellenwert (THRE) zum neuen Abtastzeitpunkt übersteigt.

12. Verfahren gemäß Anspruch 10, **dadurch gekennzeichnet, dass**
der Schritt c52) zur Verwendung des Durchschnittswerts (AVi) zum Aktualisieren des Bildcharakteristika-Einstellsteuersignals (PCACS) einen Schritt des Detektierens eines Änderungsbetrags (CAi) des Durchschnittswertes (AVi) zu jedem neuen Abtastzeitpunkt (tᵢ), des Multiplizierens des Änderungsbetrags (CAi) mit einem Verstärkungsfaktor (GF) jeder Bildcharakteristik, und des Addierens des multiplizierten Änderungsbetrags (MCAi) und des früheren Werts des Bildcharakteristika-Parameters, der der Bildcharakteristika entspricht, umfasst.

## Revendications

1. Appareil pour régler des caractéristiques d'image d'un dispositif d'affichage (DD) sur la base de conditions lumineuses au voisinage dudit dispositif d'affichage (DD),
comprenant :
**a)** un capteur de lumière (LS) pour mesurer la lumière au voisinage dudit dispositif d'affichage (DD) et pour sortir un signal de capteur de lumière correspondant (LSS) ; et
**b)** un dispositif de production de signal de commande de réglage de caractéristiques d'image (CSGD) pour produire, sur la base dudit signal de capteur de lumière (LSS), un signal de commande de réglage de caractéristiques d'image (PCACS) correspondant à la partie de lumière ambiante de ladite lumière mesurée au voisinage dudit dispositif d'affichage (DD) et à appliquer à des circuits de réglage de caractéristiques d'image (PCAC) dudit dispositif d'affichage (DD);
***caractérisé en ce que***
**c)** ledit dispositif de production de signal de commande de réglage de caractéristiques d'image (CDGD) comprend :
**c1)** un dispositif d'échantillonnage (SD) pour successivement échantillonner ledit signal de capteur de lumière (LSS) et pour sortir des valeurs d'échantillon de lumière correspondantes (DLSi) à des cadencements d'échantillonnage successifs (ti) correspondant à une vitesse d'échantillonnage prédéterminée ;
**c2)** une mémoire de valeurs d'échantillon de lumière (LSM) pour stocker, à chaque nouveau cadencement d'échantillonnage (tᵢ), un nombre prédéterminé de valeurs d'échantillon de lumière (DLSi) comprenant une valeur d'échantillon de lumière (DLSI) échantillonnée audit nouveau cadencement d'échantillonnage (ti) et une pluralité prédéterminée de valeurs d'échantillon de lumière (DLSi) échantillonnées à des cadencements d'échantillonnage précédents (tᵢ) ;
**c3)** un dispositif de calcul de moyenne (AV) pour calculer une valeur moyenne (AVi) dudit nombre prédéterminé de valeurs d'échantillon de lumière stockées (DLSi), à chaque dit nouveau cadencement d'échantillonnage (ti) ;
**c4)** un dispositif de détermination de différence MIN / MAX (MIMA) pour déterminer, à chaque dit nouveau cadencement d'échantillonnage (tᵢ), une valeur de différence (DIFFi) entre une valeur minimale et une valeur maximale (MINi, MAXi) desdites valeurs d'échantillon de lumière stockées (LSIi) ; et
**c5)** un dispositif de détermination de différence (DED) pour déterminer, à chaque dit nouveau cadencement d'échantillonnage (tᵢ), si ladite valeur de différence (DIFFi) dépasse une valeur de seuil prédéterminée (THRE) et pour utiliser ladite valeur moyenne (AVi) pour mettre à jour ledit signal de commande de réglage de caractéristiques d'image (PCACS), si ladite valeur de différence (DIFFi) est inférieure à ladite valeur de seuil prédéterminée (THRE).

2. Appareil selon la revendication 1,
***caractérisé en ce que***
ledit dispositif d'échantillonnage (SD) est formé par un convertisseur A/D (AD) pour transformer ledit signal de capteur de lumière (LSS) en valeurs d'échantillon de lumière numériques (DLSi).

3. Appareil selon la revendication 1,
***caractérisé en ce que***
ledit dispositif de détermination de différence (DED), pour utiliser ladite valeur moyenne (AVi) pour mettre à jour ledit signal de commande de réglage de caractéristiques d'image (PCACS), fixe ledit signal de commande de réglage de caractéristiques d'image (PCACS) à ladite valeur moyenne (AVi) si ladite valeur de différence (DIFFi) est inférieure à ladite valeur de seuil (THRE), et conserve ledit signal de commande de réglage de caractéristiques d'image (PCACS) à sa valeur moyenne précédente (AVi), si ladite valeur de différence (DIFFi) dépasse ladite valeur de seuil prédéterminée (THRE) audit nouveau cadencement d'échantillonnage (tᵢ).

4. Appareil selon la revendication 1,
***caractérisé par***
un dispositif de contrôle de valeur moyenne (AVMD) pour détecter une quantité de changement (CAi) de ladite valeur moyenne (AVi) à chaque dit nouveau cadencement d'échantillonnage (tᵢ), pour multiplier ladite quantité de changement (CAi) par un facteur de gain (GFi) de chaque caractéristique d'image, et pour ajouter ladite quantité de changement multipliée (MCAi) à l'ancienne valeur du paramètre de caractéristique d'image correspondant à ladite caractéristique d'image.

5. Appareil selon la revendication 1,
***caractérisé en ce que***
ladite vitesse d'échantillonnage est égale à 10 Hz, ledit nombre prédéterminé de points d'échantillon de lumière (LSP) est égal à 10, et ladite valeur de seuil est égale à 1,29 Volts.

6. Appareil selon la revendication 1,
***caractérisé en ce que***
ledit dispositif d'affichage (DD) est un CRT (tube à rayons cathodiques), un LCD (dispositif d'affichage à cristaux liquides) ou un afficheur à plasma.

7. Appareil selon la revendication 1,
***caractérisé en ce que***
ladite mémoire de valeurs d'échantillon de lumière (LSM) comprend une mémoire FILO (FILO).

8. Appareil selon la revendication 1,
***caractérisé en ce que***
lesdites caractéristiques d'image sont sélectionnées dans le groupe constitué par un ou plusieurs de la luminosité, du contraste, de la couleur et de la netteté.

9. Dispositif d'affichage (DD) comprenant des circuits de réglage de caractéristiques d'image (PCAC) pour régler des caractéristiques d'image dudit dispositif d'affichage (DD) et un appareil selon une ou plusieurs des revendications 1 à 8 pour sortir ledit signal de commande de réglage de caractéristiques d'image (PCACS) vers lesdits circuits de réglage de caractéristiques d'image (PCAC).

10. Procédé pour régler des caractéristiques d'image d'un dispositif d'affichage (DD) sur la base de conditions lumineuses au voisinage dudit dispositif d'affichage (DD),
comprenant les étapes consistant à :
**a)** mesurer (S1) la lumière au voisinage dudit dispositif d'affichage (DD) et sortir un signal de capteur de lumière correspondant (LSS) ; et
**b)** produire (S2), sur la base dudit signal de capteur de lumière (LSS), un signal de commande de réglage de caractéristiques d'image (PCACS) correspondant à la partie de lumière ambiante de ladite lumière mesurée au voisinage dudit dispositif d'affichage (DD) et à appliquer à des circuits de réglage de caractéristiques d'image (PCAC) dudit dispositif d'affichage (DD) ;
***caractérisé en ce que***
c) l'étape b) consistant à produire ledit signal de commande de réglage de caractéristiques d'image (PCACS) comprend les étapes suivantes consistant à :
**c1)** échantillonner successivement (S21) ledit signal de capteur de lumière (LSS) et sortir (S21) des valeurs d'échantillon de lumière correspondantes (DLSi) à des cadencements d'échantillonnage successifs (ti) correspondant à une vitesse d'échantillonnage prédéterminée ;
**c2)** stocker (S22) à chaque nouveau cadencement d'échantillonnage (ti) un nombre prédéterminé de valeurs d'échantillon de lumière (DLSi), comprenant une valeur d'échantillon de lumière (DLSI) échantillonnée audit nouveau cadencement d'échantillonnage et une pluralité prédéterminée de valeurs d'échantillon de lumière (DLSi) échantillonnées à des cadencements d'échantillonnage précédents (tᵢ), dans une mémoire de valeurs d'échantillon de lumière (LSM) ;
**c3)** calculer (S23) une valeur moyenne (AVi) dudit nombre prédéterminé de valeurs d'échantillon de lumière stockées (DLSi) à chaque nouveau cadencement d'échantillonnage (tᵢ) ;
**c4)** déterminer (S24, S25), à chaque dit nouveau cadencement d'échantillonnage (tᵢ), une valeur de différence (DIFFi) entre une valeur minimale et une valeur maximale (MINi, MAXi) desdites valeurs d'échantillon de lumière stockées (DLSi) ;
**c51)** déterminer (S25), à chaque dit nouveau cadencement d'échantillonnage (tᵢ), si vraiment ladite valeur de différence (DIFFi) dépasse une valeur de seuil prédéterminée (THRE), et
**c52)** utiliser (S27) ladite valeur moyenne (AVi) pour mettre à jour ledit signal de commande de réglage de caractéristiques d'image (PCACS), si ladite valeur de différence (DIFFi) est inférieure à ladite valeur de seuil prédéterminée (THRE).

11. Procédé selon la revendication 10,
***caractérisé en ce que***
ladite étape c52), pour utiliser ladite valeur moyenne (AVi) pour mettre à jour ledit signal de commande de réglage de caractéristiques d'image (PCACS), fixe ledit signal de commande de réglage de caractéristiques d'image (PCACS) à ladite valeur moyenne (AVi), si ladite valeur de différence (DIFFi) est inférieure à ladite valeur de seuil (THRE), et conserve ledit signal de commande de réglage de caractéristiques d'image (PCACS) à sa valeur moyenne précédente (AV), si ladite valeur de différence (DIFF) dépasse ladite valeur de seuil prédéterminée (THRE) audit nouveau cadencement d'échantillonnage.

12. Procédé selon la revendication 10,
***caractérisé en ce que***
ladite étape c52) comprend, pour utiliser ladite valeur moyenne (AVi) pour mettre à jour ledit signal de commande de réglage de caractéristiques d'image (PCACS), une étape consistant à détecter une quantité de changement (CAi) de ladite valeur moyenne (AVi) à chaque dit nouveau cadencement d'échantillonnage (tᵢ), pour multiplier ladite quantité de changement (CAi) par un facteur de gain (GF) de chaque caractéristique d'image, et pour ajouter ladite quantité de changement multipliée (MCAi) à l'ancienne valeur du paramètre de caractéristique d'image correspondant à ladite caractéristique d'image.
